# EUROPEAN PATENT SPECIFICATION

(11) **EP 1 042 056 B1**
(45) Date of publication and mention of the grant of the patent: **26.09.2001**
(21) Application number: 98962705.4
(22) Date of filing: 24.12.1998
(51) Int. Cl.: B01J 2/18, B01J 2/06

(54) **METHOD AND APPARATUS FOR FORMING GRANULATE FROM A MELT OF CHEMICAL PRODUCTS**
VERFAHREN UND VORRICHTUNG ZUR HERSTELLUNG VON GRANULATEN AUS EINEM SCHMELZ VON CHEMISCHEN PRODUKTEN
PROCEDE ET APPAREIL DE FORMATION DE GRANULES A PARTIR D'UN BAIN DE FUSION DE PRODUITS CHIMIQUES

(30) Priority: 24.12.1997 NL 1007904
(43) Date of publication of application: 11.10.2000
(73) Proprietor: GOUDSCHE MACHINEFABRIEK B.V., NL-2741 PD Waddinxveen (NL)
(72) Inventor: MOEKARDANOE, Marco, André, NL-7007 GK Doetinchem (NL); VAN HEIJNINGEN, Ronnie, Johannes, Maria, NL-2681 LN Monster (NL); ZORGE, René, Jan, NL-2803 GA Gouda (NL)
(74) Representative: Prins, Adrianus Willem
(86) International application number: NL9800733
(87) International publication number: WO9933555

(56) References cited:
- GB-A- 1 115 071
- US-A- 3 689 607
- US-A- 4 552 566

## Description

The invention relates to a method for forming granulate from a melt of chemical products, which comprises ejecting the melt from a chamber having a chamber wall in the form of a plate provided with openings through these openings into a vertical fall pipe chamber, thereby forming in an upper region of the fall pipe chamber fine droplets which during their free fall in the fall pipe chamber are cooled by a supplied cooling medium, and withdrawing granulate thus formed by cooling in a lower region of the fall pipe chamber, as well as to an apparatus for carrying out such a method.

A method as referred to in the preceding paragraph is known from US-A 3,552,566. Here the melt is introduced into the fall pipe chamber via a spray nozzle, the cooling medium, for instance water or alcohol, being atomized through laterally disposed spray nozzles around the droplets from the spray nozzle. Thus it is possible with a fall pipe height of 3 m to obtain granulate consisting of granules of a diameter in the range from 0.3 to 5 mm.

It is an object of the invention to provide a substantially narrowed diameter range of the granulate formed, in combination with a further reduction of the fall pipe height.

According to the invention, this is achieved by a method of the type described in the opening paragraph if the melt is ejected in vertical or substantially vertical direction and the cooling medium used is a deep-cold fluid which is introduced into the fall pipe chamber cocurrently to the ejected melt and is discharged in the lower region of the fall pipe chamber as gas or vapor. By taking these measures, all the droplets are ejected in parallel and vertical paths, that is to say paths which do not even by the action of gravity intersect each other, so that the risk of two or more droplets adhering together is reduced to a minimum. Furthermore, cocurrently feeding the cooling medium keeps the free fall conditions equal for the different droplets and prevents disturbance of the pattern of parallel paths so that the risk of droplets adhering together and, consequently, increase in the diameter range of the granulate to be formed is minimal. Using a deep-cold fluid as cooling medium, for which preference is given to a liquid gas, such as nitrogen, has the result that, so to speak, a solidified coating immediately freezes around a droplet. This ensures that, on the one hand, the conditions under which the droplets may adhere together are removed as rapidly as possible and, on the other hand, by forming the solidified coating around the still weak core by evaporation of the deep-cold fluid a solid granulate external form is realized within such a short period of time that the fall pipe height can be reduced to a minimum.

In order to allow the height of fall to be as small as possible, the deep-cold fluid should exert its cooling effect on the droplets as optimally, that is to say as rapidly and intensively as possible. To this end, it is preferred according to a further embodiment of the invention that the openings in the plate are arranged in an annular pattern with the deep-cold fluid being supplied both centrally within and along the circumference of the annular pattern. Thus a fall pipe height of the order from 1 to 2 m may be sufficient.

In order to still further narrow the diameter range of the granulate formed, it is preferred according to a further embodiment of the invention that a vibration is vertically exerted on the melt in the chamber via a diaphragm. By taking these measures, a jet from an opening is separated by the vertical vibration into droplets which all, through the imposed natural frequency, mutually have a substantially equal size so that a granulate is obtained which is very uniform as regards diameter.

With such small fall pipe heights, the visually hard granules often still have a weak to liquid core. In this connection, it is further preferred according to the invention that the granulate at least partly formed in the fall pipe chamber by cooling and solidifying is supplied from the lower end of the fall pipe chamber to a further space where further solidification and cooling takes place by intensive contact with a cold gas. Because of the externally hard granule shape, part of the solidification and cooling, which first had to take place during the free fall, can now be carried out in an accurately controlled and regulated manner in a fluid bed cooler which is compact as regards overall height.

The invention also relates to an apparatus for carrying out a method for forming granulate from a melt of chemical products, which apparatus comprises a chamber having a chamber wall in the form of a plate provided with openings, which openings discharge into an upper end of a fall pipe chamber which near a lower end is provided with a granulate outlet, the fall pipe chamber being provided near the plate with means for supplying a cooling medium and near the granulate outlet with means for discharging fluid turned gaseous by evaporation, as is known from US-A 4,552,566. In order to keep the diameter range of the granulate formed, on the one hand, and the fall pipe height, on the other hand, relatively small, it is proposed according to the invention that the plate has a flat shape extending perpendicularly to the longitudinal direction of the fall pipe chamber and the openings provided in the plate are bores with axes parallel to the longitudinal direction of the fall pipe chamber, the means for supplying a cooling medium being arranged to introduce into the fall pipe chamber a deep-cold fluid substantially parallel to the longitudinal direction of that chamber. By taking these measures, each droplet moves in its own path and its own plane without making contact with a droplet in another path or another plane. Partly because of this, a droplet formed can be rapidly and effectively surrounded with a hard coating by cooling by means of a deep-cold fluid, in particular if the plate is provided with an annular pattern of openings, means for supplying fluid being provided both centrally within that pattern and along the inner circumferential wall of the fall pipe chamber. The droplets just formed can be cooled very efficiently and uniformly with an atomized cooling fluid so that after forming the hard coating each droplet formed further behaves nearly immediately as an individual solid particle which shows little tendency, if any, to adhere to another particle, the more so as keeping the droplets in separate paths and planes prevents the coating rapidly formed and being, certainly in the beginning, still thin from being damaged.

If according to a further embodiment of the invention the chamber has a further wall opposite and parallel to the wall formed by the plate, which at least partly consists of a diaphragm to be set by a vibrating unit in vibration with an amplitude in the direction of the plate, droplets are obtained with a mutually equal size and mass so that they all fall down in the fall pipe chamber in a mutually not changing pattern so that a further protection against mutual contact is obtained and the diameter range of the granulate formed is reduced to a minimum.

By rapidly creating a hard coating around a droplet, the height of the fall pipe chamber can be kept very small, for instance from 1 to 2 m. Although the particles then reaching the lower end of the fall pipe chamber have a hard exterior, they may still have a weak to liquid core so that further cooling and solidification may be desirable. This may be effected in a fluid bed cooler relatively low as regards overall height, for which it is to be preferred according to a further embodiment of the invention that the granulate outlet discharges into a ring chamber of a cooler, which ring chamber comprises a closed upper wall, a perforated ring bottom and cylindrical inner and outer circumferential walls, the outer circumferential wall being formed from the ring bottom over at least part of its height by tangentially directed blades, the ring bottom and the part of the circumferential wall formed by blades communicating with an enclosed space provided with means for supplying a cooling gas, the ring chamber in its upper region being provided with means for discharging the cooling gas, and the bottom near the inner circumferential wall being provided with a granulate outlet. In such a cooler, the particles are kept by the supplied air in a centrifugal fluid bed, a circular turbulent band of particles being created which effects a rapid and proper cooling in an apparatus of relatively low overall height.

Both the overall height of the fall pipe chamber and that of the cooler are such that even if the cooler is arranged below the fall pipe chamber, the total overall height remains relatively low so that the size of the complete apparatus is to be kept relatively small. This compacting effect can even be increased if several fall pipe chambers with their granulate outlets communicate with the ring chamber so that without increasing the overall height the capacity of the apparatus can be multiplied.

With reference to an exemplary embodiment shown in the drawings, the method and apparatus according to the invention will hereinafter be explained and illustrated in more detail. In these drawings:
Fig. 1 is a diagrammatic side view of an apparatus for forming granulate from a melt of chemical products;
Fig. 2 is a cross-section taken on the line II-II in Fig. 1; and
Fig. 3 is a cross-section taken on the line III-III in Fig. 1.

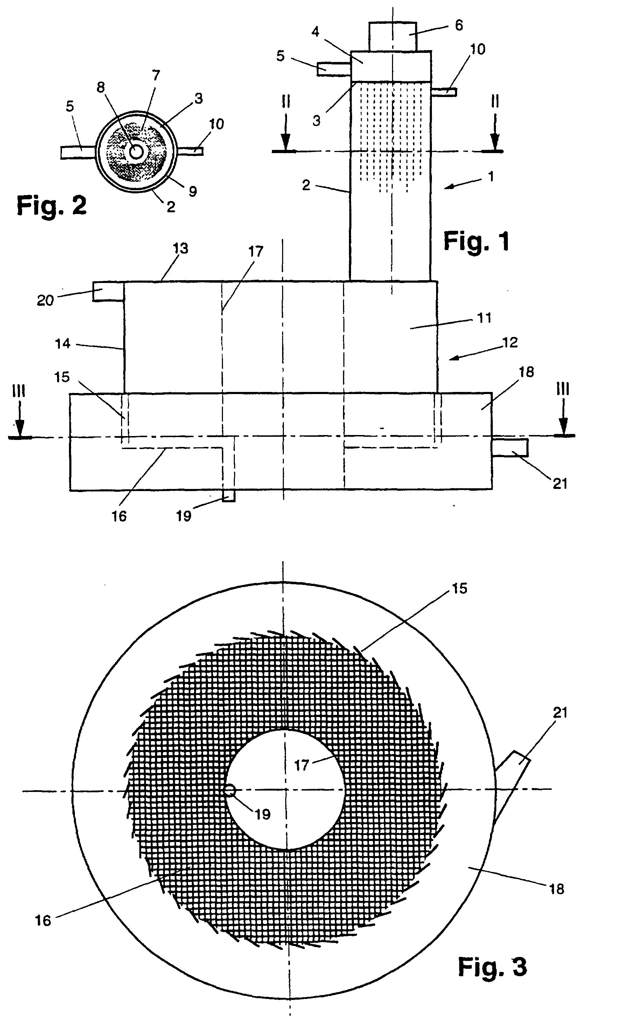

In Fig. 1, a fall pipe chamber 1 is shown which comprises a circumferential wall in the form of a tube 2 of circular cross-section which is closed at the upper end by a plate 3 having a flat shape extending perpendicularly to the axis of the tube 2 and forming the lower wall of a chamber 4 which is fed with a melt of chemical products via a line 5.

The upper end of the chamber 4 is at least partly formed by a diaphragm to be set in vibration with a vertical amplitude via a vibrating unit 6. As most clearly shown in Fig. 2, the plate 3 is provided with a large number of openings 7 arranged in an annular pattern, consisting of cylindrical bores the axes of which are vertical. Centrally placed within the annular pattern is a head 8 which, as is the case with a ring line 9, serves to supply a deep-cold fluid from a line 10 in vertical downward direction.

The lower end of the fall pipe chamber 1 is of open design and discharges into a ring chamber 11 of a cooler 12. The ring chamber 11 is surrounded by an upper wall 13 which is closed except for its connection to the lower end of the fall pipe chamber 1, a closed cylindrical wall portion 14, a wall portion connecting thereto, defined by tangentially arranged blades 15, an annular perforated bottom plate 16, and a closed cylindrical inner wall 17. The perforated bottom plate 16 is included in an enclosed space 18 which further envelops the wall portion defined by the blades 15. The ring chamber 11 is provided with a granulate outlet 19 and a cooling medium outlet 20. The enclosed space 18 is provided with a tangentially directed cooling gas supply 21.

To obtain a granulate from a melt of chemical products, the following procedure may be adopted.

The melt is supplied via the line 5 to the chamber 4. The upper wall of the chamber 4 is set in vibration with a vertical amplitude by the vibrating unit 6, such that the melt pressed in jets through the openings 7 is nearly immediately subdivided into droplets all of similar size and mass. Since the flat plate 3 is horizontally arranged and the openings consist of cylindrical bores with vertical axes, the droplets thus formed will fall down within the tube 2 of the fall pipe chamber 1 purely vertically and without influencing each other. From the head 8 and the ring line 9, a deep-cold fluid, for instance liquid nitrogen, is introduced into the fall pipe chamber 1 cocurrently to the droplets, that is to say in downward vertical direction. By ejecting the different droplets successively in different planes and adjacent to each other in parallel vertical walls and disallowing the introduced cooling medium to disturb this pattern, it is ensured that during their free fall in the fall pipe chamber the different droplets do not come into contact with each other so that the droplets initially all ejected in a similar size and mass result in a granulate of nearly uniform diameter. The cold energy formed during the evaporation of the deep-cold fluid causes a solidified coating to be formed nearly immediately around each droplet formed. During its falling further down in the fall pipe chamber 1, this coating will still grow a little, the deep-cold fluid ensuring that also when the fall pipe height is relatively small the coating is thick enough to remain intact at the granulate outlet where it comes into contact with other particles so that there, too, particles cannot adhere together and the uniform granulate diameter is maintained.

The droplets thus at least partly solidified pass, together with the evaporated cooling fluid, from the fall pipe chamber 1 to the ring chamber 11 of the cooler 12. To this ring chamber 11 is supplied via the perforated bottom 16 and between the tangentially disposed blades 15 a cooling gas introduced into the enclosed space 18 via the inlet 21. This supplying step is carried out such that in the ring chamber 11 a fluid bed is formed which, partly because of the tangentially disposed blades 15, obtains the shape of a circular turbulent band of particles with an upper surface which, by the centrifugal action, is inclined downwards from the outer wall 14, 15 in the direction of the inner wall 17. Thus an effective complete solidification and cooling takes place. The evaporated cooling fluid and the cooling gas leave the ring chamber 11 via the outlet 20, while granulate is to be withdrawn from the ring chamber 11 via the outlet 19.

It is self-explanatory that within the framework of the invention as laid down in the annexed claims many modifications and variants are possible. Thus for instance, several fall pipe chambers may be present which all discharge into the ring chamber of the cooler. Although preference is given to the cooler shown, it is of course also possible to use any other suitable type of cooler. Furthermore, the tube casing of the fall pipe chamber may have any other suitable cross-section and the pattern of openings, too, may be carried out in many other ways, which is also the case with the arrangement and design of the means for introducing the deep-cold fluid.

## Claims

1. A method for forming granulate from a melt of chemical products, which comprises ejecting the melt from a chamber (4) having a chamber wall in the form of a plate (3) provided with openings (7) through these openings into a vertical fall pipe chamber (1), thereby forming in an upper region of the fall pipe chamber fine droplets which during their free fall in the fall pipe chamber are cooled by a supplied cooling medium, and withdrawing granulate thus formed by cooling in a lower region of the fall pipe chamber, **characterized in that** the melt is ejected in vertical or substantially vertical direction and the cooling medium used is a deep-cold fluid which is introduced into the fall pipe chamber cocurrently to the ejected melt and is discharged in the lower region of the fall pipe chamber as gas or vapor.

2. A method according to claim 1, **characterized in that** the deep-cold fluid used is a liquid gas, such as nitrogen.

3. A method according to claim 1 or 2, **characterized in that** the openings (7) in the plate (3) are arranged in an annular pattern, the deep-cold fluid being supplied both centrally within and along the circumference of the annular pattern.

4. A method according to any one of the preceding claims, **characterized in that** a vibration is vertically exerted on the melt in the chamber (4) via a diaphragm.

5. A method according to any one of the preceding claims, **characterized in that** the granulate at least partly formed in the fall pipe chamber (1) by cooling and solidifying is supplied from the lower end of the fall pipe chamber to a further space (11) where further solidification and cooling takes place by intensive contact with a cold gas.

6. An apparatus for carrying out a method according to any one of the preceding claims and provided with a chamber (4) having a chamber wall in the form of a plate (3) provided with openings (7), which openings discharge into an upper end of a fall pipe chamber (1) which near a lower end is provided with a granulate outlet, the fall pipe chamber being provided near the plate with means (8, 10) for supplying a cooling medium and near the granulate outlet with means for discharging fluid turned gaseous by evaporation, **characterized in that** the plate (3) has a flat shape extending perpendicularly to the longitudinal direction of the fall pipe chamber (1) and the openings (7) provided in the plate are bores with axes parallel to the longitudinal direction of the fall pipe chamber, the means for supplying a cooling medium being arranged to introduce into the fall pipe chamber a deep-cold fluid substantially parallel to the longitudinal direction of that chamber.

7. An apparatus according to claim 6, **characterized in that** the plate (3) is provided with an annular pattern of openings (7), means (8, 10) for supplying fluid being provided both centrally within that pattern and along the inner circumferential wall of the fall pipe chamber (1).

8. An apparatus according to claim 6 or 7, **characterized in that** the chamber (4) has a further wall opposite and parallel to the wall formed by the plate (3), which at least partly consists of a diaphragm to be set by a vibrating unit (6) in vibration with an amplitude in the direction of the plate.

9. An apparatus according to any one of claims 6-8, **characterized in that** the granulate outlet discharges into a ring chamber (11) of a cooler (12), which ring chamber comprises a closed upper wall (13), a perforated ring bottom (16) and cylindrical inner and outer circumferential walls (14, 15, 17), the outer circumferential wall being formed from the ring bottom over at least part of its height by tangentially directed blades (15), the ring bottom and the part of the circumferential wall formed by blades communicating with an enclosed space (18) provided with means (21) for supplying a cooling gas, the ring chamber in its upper region being provided with means (20) for discharging the cooling gas, and the bottom near the inner circumferential wall being provided with a granulate outlet (19).

10. An apparatus according to claim 9, **characterized in that** the cooler (12) is arranged below the fall pipe chamber (1).

11. An apparatus according to claim 9 or 10, **characterized in that** several fall pipe chambers (1) with their granulate outlets (19) communicate with the ring chamber (11).

## Patentansprüche

1. Verfahren zur Bildung von Granulat aus einer Schmelze chemischer Produkte, mit dem Schritt des Ausstoßens der Schmelze aus einer Kammer (4), die eine Kammerwand in Form einer mit Öffnungen (7) versehenen Platte (3) aufweist, durch die Öffnungen in eine vertikale Fallrohrkammer (1), wodurch in einem oberen Bereich der Fallrohrkammerfeine Tröpfchen gebildet werden, die während des freien Falls in der Fallrohrkammer durch ein zugeführtes Kühlmedium gekühlt werden, und dem Schritt des Entnehmens des derart gebildeten Granulats durch Kühlen in einem unteren Bereich der Fallrohrkammer, **dadurch gekennzeichnet, daß** die Schmelze in vertikaler oder im wesentlichen vertikaler Richtung ausgestoßen wird und das verwendete Kühlmedium ein Tiefkühlfluid ist, das in die Fallrohrkammer gleichzeitig mit der Schmelze eingeleitet wird und als Gas oder Dampf im unteren Bereich der Fallrohrkammer abgelassen wird.

2. Verfahren nach Anspruch 1, **dadurch gekennzeichnet, daß** das verwendete Tiefkühlfluid ein flüssiges Gas, beispielsweise Stickstoff, ist.

3. Verfahren nach Anspruch 1 oder 2, **dadurch gekennzeichnet, daß** die Öffnungen (7) in der Platte (3) in ringförmigem Muster angeordnet sind, wobei das Tiefkühlfluid sowohl mittig innerhalb, als auch entlang des Umfangs des ringförmigen Musters zugeführt wird.

4. Verfahren nach einem der vorhergehenden Ansprüche, **dadurch gekennzeichnet, daß** eine Schwingung über eine Membran vertikal auf die Schmelze in der Kammer (4) aufgebracht wird.

5. Verfahren nach einem der vorhergehenden Ansprüche, **dadurch gekennzeichnet, daß** das wenigstens teilweise in der Fallrohrkammer (1) durch Kühlen und Verfestigen gebildete Granulat aus dem unteren Ende der Fallrohrkammer in einen weiteren Raum (11) geliefert wird, in dem eine weitere Verfestigung und Kühlung durch intensiven Kontakt mit einem kalten Gas erfolgt.

6. Vorrichtung zum Durchführen eines Verfahrens nach einem der vorhergehenden Ansprüche und mit einer Kammer (4) mit einer Kammerwand in Form einer Platte (3), die mit Öffnungen (7) versehen ist, welche in ein oberes Ende einer Fallrohrkammer (1) münden, die nahe einem unteren Ende mit einem Granulatauslaß versehen ist, wobei die Fallrohrkammer nahe der Platte mit einer Einrichtung (8, 10) zum Zuführen eines Kühlmediums und nahe dem Granulatauslaß mit einer Einrichtung zum Auslaß von durch Verdampfung gasig gewordenem Fluid versehen ist, **dadurch gekennzeichnet, daß** die Platte (3) flach ist und sich orthogonal zur Längsrichtung der Fallrohrkammer (1) erstreckt, und daß die Öffnungen (7) in der Platte Bohrungen sind, deren Achsen parallel zur Längsrichtung der Fallrohrkammer verlaufen, wobei die Einrichtung zum Zuführen eines Kühlmediums angeordnet ist, um ein Tiefkühlfluid im wesentlichen parallel zur Längsrichtung der Kammer in die Fallrohrkammer einzuleiten.

7. Vorrichtung nach Anspruch 6, **dadurch gekennzeichnet, daß** die Platte (3) mit einem ringförmigen Muster von Öffnungen (7) versehen ist, wobei die Einrichtung (8, 10) zum Zuführen von Fluid sowohl mittig in dem Muster, als auch entlang der Innenumfangswand der Fallrohrkammer (1) angeordnet ist.

8. Vorrichtung nach Anspruch 6 oder 7, **dadurch gekennzeichnet, daß** die Kammer (4) gegenüber und parallel zu der durch die Platte (3) gebildeten Wand eine weitere Wand aufweist, die wenigstens zum Teil aus einer Membran besteht, die von einer Vibrationseinheit (6) in Schwingungen mit einer Amplitude in Richtung der Platte versetzt wird.

9. Vorrichtung nach einem der Ansprüche 6-8, **dadurch gekennzeichnet, daß** der Granulatauslaß in eine Ringkammer (11) einer Kühleinrichtung (12) mündet, wobei die Ringkammer eine geschlossene Oberwand (13), einen perforierten Ringboden (16) und zylindrische Innen- und Außenumfangswände (14, 15, 17) aufweist, wobei die Außenumfangswand über wenigstens einen Teil der Höhe aus dem Ringboden durch tangential gerichtete Klingen (15) gebildet ist, wobei der Ringboden und der von den Klingen gebildete Teil der Umfangswand mit einem umschlossenen Raum (18) verbunden sind, der mit einer Einrichtung (21) zum Zuführen eines Kühlgases versehen ist, wobei die Ringkammer in ihrem oberen Bereich mit einer Einrichtung (20) zum Auslassen des Kühlgases versehen ist, und der Boden nahe der Innenumfangswand mit einem Granulatauslaß (19) versehen ist.

10. Vorrichtung nach Anspruch 9, **dadurch gekennzeichnet, daß** die Kühlenrichtung (12) unter der Fallrohrkammer (1) angeordnet ist.

11. Vorrichtung nach Anspruch 9 oder 10, **dadurch gekennzeichnet, daß** mehrere Fallrohrkammern (1) über ihre Granulatauslässe (19) mit der Ringkammer (11) verbunden sind.

## Revendications

1. Procédé de formation de granulés à partir de produits chimiques fondus, qui comprend l'éjection de la matière fondue d'une chambre (4), possédant une paroi de chambre sous forme d'une plaque (3) ayant des ouvertures (7), par ces ouvertures et dans une chambre verticale à tube de chute (1), avec formation de cette manière, dans une région supérieure de la chambre à tube de chute, de fines gouttelettes qui, dans leur chute libre dans la chambre à tube de chute, sont refroidies par un fluide transmis de refroidissement, et l'extraction des granulés ainsi formés par refroidissement dans une région inférieure de la chambre à tube de chute, **caractérisé en ce que** la matière fondue est éjectée en direction verticale ou pratiquement verticale, et le fluide de refroidissement utilisé est un fluide très froid introduit dans la chambre à tube de chute concurremment avec la matière fondue éjectée et est évacué dans la région inférieure de la chambre à tube de chute sous forme d'un gaz ou d'une vapeur.

2. Procédé selon la revendication 1, **caractérisé en ce que** le fluide très froid utilisé est un gaz à l'état liquide, tel que de l'azote.

3. Procédé selon la revendication 1 ou 2, **caractérisé en ce que** les ouvertures (7) de la plaque (3) forment un motif annulaire, le fluide très froid étant transmis à la fois au centre, à l'intérieur de la circonférence du motif annulaire, et le long de cette circonférence.

4. Procédé selon l'une quelconque des revendications précédentes, **caractérisé en ce qu'**une vibration est appliquée verticalement à la matière fondue dans la chambre (4) par l'intermédiaire d'un diaphragme.

5. Procédé selon l'une quelconque des revendications précédentes, **caractérisé en ce que** les granulés formés au moins partiellement dans la chambre à tube de chute (1) par refroidissement et solidification sont transmis de l'extrémité inférieure de la chambre à tube de chute vers un espace supplémentaire (11) dans lequel une solidification et un refroidissement supplémentaires sont exécutés par contact intensif avec un gaz froid.

6. Appareil destiné à la mise en oeuvre d'un procédé selon l'une quelconque des revendications précédentes, et possédant une chambre (4) ayant une paroi de chambre sous forme d'une plaque (3) munie d'ouvertures (7), ces ouvertures débouchant à une extrémité supérieure d'une chambre à tube de chute (1) qui comporte, près d'une extrémité inférieure, une sortie de granulés, la chambre à tube de chute comportant, près de la plaque, un dispositif (8, 10) de transmission d'un fluide de refroidissement et, près de la sortie de granulés, un dispositif d'évacuation d'un fluide devenu gazeux par évaporation, **caractérisé en ce que** la plaque (3) a une forme plate et s'étend perpendiculairement à la direction longitudinale de la chambre à tube de chute (1), et les ouvertures (7) formées dans la plaque sont des trous d'axes parallèles à la direction longitudinale de la chambre à tube de chute, le dispositif de transmission d'un fluide de refroidissement étant destiné à introduire dans la chambre à tube de chute un fluide très froid en direction pratiquement parallèle à la direction longitudinale de cette chambre.

7. Appareil selon la revendication 6, **caractérisé en ce que** la plaque (3) possède un motif annulaire d'ouvertures (7), le dispositif (8, 10) de transmission d'un fluide étant placé à la fois au centre de ce motif et le long de la paroi circonférentielle interne de la chambre à tube de chute (1).

8. Appareil selon la revendication 6 ou 7, **caractérisé en ce que** la chambra (4) a une paroi supplémentaire opposée et parallèle à la paroi formée par la plaque (3) qui est constituée au moins d'un diaphragme destiné à être mis en vibration par une unité (6) de vibration avec une amplitude orientée dans la direction de la plaque.

9. Appareil selon l'une quelconque des revendications 6 à 8, **caractérisé en ce que** la sortie de granulés débouche dans une chambre annulaire (11) d'un refroidisseur (12), cette chambre annulaire comprenant une paroi supérieure fermée (13), un fond annulaire perforé (16) et des parois circonférentielles interne et externe cylindriques (14, 15, 17), la paroi circonférentielle externe étant formée depuis le fond annulaire sur une partie au moins de sa hauteur par des ailettes dirigées tangentiellement (15), le fond annulaire et la partie de paroi circonférentielle formée par les ailettes communiquant avec un espace fermé (18) comprenant un dispositif (21) de transmission d'un gaz de refroidissement, la chambre annulaire, dans sa région supérieure, étant munie d'un dispositif (20) d'évacuation de gaz de refroidissement, et son fond, près de la paroi circonférentielle interne, étant muni d'une sortie de granulés (19).

10. Appareil selon la revendication 9, **caractérisé en ce que** le refroidisseur (12) est disposé au-dessous de la chambre à tube de chute (1).

11. Appareil selon la revendication 9 ou 10, **caractérisé en ce que** plusieurs chambres à tube de chuta (1) ayant des sorties de granulés (19) communiquent avec la chambre annulaire (11).
